# EUROPEAN PATENT SPECIFICATION

(11) **EP 3 002 190 B1**
(45) Date of publication and mention of the grant of the patent: **21.06.2017**
(21) Application number: 15187178.7
(22) Date of filing: 28.09.2015
(51) Int. Cl.: B62J 17/04

(54) **SADDLE-TYPE RIDE VEHICLE**
SATTELFAHRZEUG
VÉHICULE À SELLE

(30) Priority: 30.09.2014 JP 2014202150
(43) Date of publication of application: 06.04.2016
(73) Proprietor: HONDA MOTOR CO., LTD., Tokyo, 107-8556 (JP)
(72) Inventor: TANABE, Gen, Wako-shi, Saitama 351-0193 (JP); SEO, Satoshi, Wako-shi, Saitama 351-0193 (JP); KOMATSU, Akihiro, Wako-shi, Saitama 351-0193 (JP); OKUBO, Takefumi, Wako-shi, Saitama 351-0193 (JP); AKIEDA, Masao, Wako-shi, Saitama 351-0193 (JP)
(74) Representative: Piésold, Alexander James

(56) References cited:
- EP-A1- 2 192 033
- EP-A2- 1 081 032
- EP-A2- 2 082 951
- AU-A- 8 412 282

## Description

The present invention relates to a saddle-ride type vehicle having an improved front structure.

Saddle-ride type vehicles configured such that a vehicle body is covered with a cowl are known. Travelling performance can be improved by achieving a smooth flow of traveling air by the cowl. The cowl for covering a front part of a vehicle body is called a front cowl. Various kinds of shapes or structures of the front cowl have been proposed (see, for example, JP 4153174, and in particular Figures 1 and 15).

A vehicle (10) (the numbers in parentheses here correspond to the reference numerals of JP 4153174) shown in Fig. 1 of JP 4153174 includes a front cowl (21). The front cowl (21) has an air introduction port (32a) formed in an upper central region.

As shown in Fig. 15 of JP 4153174, air (Fw) which flows into the air introduction port (32a) is led to flow along a back surface of a windshield (31) as shown by an arrow (Rw). Low pressure (also referred to as vacuum) at the back surface of the windshield (31) can be corrected by a flow shown by the arrow (Rw).

If it is necessary to reinforce vacuum correction action, an increase in the opening area of the air introduction port (32a) and an increase in a flow rate of air introduction are effective.

As can be seen in Fig. 1 of JP 4153174, when the air introduction port (32a) is enlarged, it is necessary to increase a width of the front cowl (21) and to maintain rigidity. As a result, the front cowl (21) is enlarged, and weight of the front cowl is increased.

However, since miniaturization and weight reduction of the vehicle are required, the enlargement and an increase in weight of the front cowl are undesirable.

An alternative form of front cowl and windshiled device for a motorcycle is disclosed in EP 1081032.

Therefore, a saddle-ride type vehicle is required, which is capable of achieving the miniaturization of the front cowl while ensuring the flow rate of the air introduction.

An object of at least the preferred embodiments of the present invention is to provide a saddle-ride type vehicle capable of achieving miniaturization of a front cowl while ensuring a flow rate of air introduction.

According to a first aspect of the invention, there is provided a saddle-ride type vehicle comprising: a vehicle body frame with a head pipe; a front wheel suspension arranged below the head pipe; a handlebar arranged above the head pipe that steers the front wheel suspension; a front cowl supported on the vehicle body frame that covers an upper part of the front wheel suspension and the handlebar from a front side of the vehicle; and a windshield supported on the vehicle body frame through a windshield stay and arranged above the front cowl, wherein the windshield is formed as a vertically long windshield with a vertical dimension being larger than a lateral dimension, and has an opening formed below the vertical centre of the windshield and penetrating longitudinally through the windshield, and a guide member allowing first traveling air flowing through the opening to flow along a back surface of the windshield is arranged behind the opening; characterized in that the windshield has right and left notches formed on right and left sides of the opening, the notches being formed in such a manner that a lower part of the windshield is recessed laterally inward in comparison with the vertical centre, the front cowl is provided with inner wall guide surfaces extending rearwardly and keeping predetermined intervals from the notches, and second traveling air is introduced between the notches and the inner wall guide surfaces.

Since the opening is formed in the windshield rather than in the front cowl, it is not necessary to increase the width of the front cowl, and the front cowl can be reduced in size. Further, since the windshield is vertically long, the opening can also be formed to be vertically long, and an adequate opening area can be ensured. The first traveling air is led to flow along the back surface of the windshield by the guide member. Thereby, generation of vacuum (low pressure) at the back surface of the windshield is suppressed.

Thus, at least the first aspect of the present invention provides a saddle-ride type vehicle capable of achieving the miniaturization of the front cowl while ensuring the flow rate of the air introduction (first traveling air).

Further, since the second traveling air is guided by the inner wall guide surfaces extending in the longitudinal direction of the vehicle, the second traveling air is directed rearwardly without being bent laterally. As a result, the possibility of the entrainment of the second traveling air into the back surface of the windshield is precluded.

Preferably, the windshield stay is provided with right and left side guide surfaces for sandwiching the guide member and also suppressing dispersion of the first traveling air in the lateral direction.

With this arrangement, the first traveling air is guided by the right and left guide surfaces which are located behind the opening, and is suppressed from being laterally dispersed. Therefore, the first traveling air can be led to flow along the back surface of the windshield with economy. Since the right and left guide surfaces are provided, effective air introduction is increased, so that the opening area can be also reduced.

In a further preferred form, the windshield is obliquely attached in such a manner that an upper part thereof is positioned rearwardly of a lower part thereof in a side view of the vehicle, and a mounting angle with respect to a horizontal line is set within a range of 45° to 80°.

Since the windshield is attached generally upright, predetermined windbreak action can be exerted even by the compact windshield. Since the windshield is compact, the reduction in weight of the windshield can be achieved.

In a further preferred form, inclined edges are provided above the notches and are inclined so as to be heightened laterally outwardly, the front cowl has inclined pieces located behind the inclined edges, the inclined pieces being bent rearwardly along ridge lines which extend substantially parallel to the inclined edges, and third traveling air flowing along the inclined edges is directed laterally inwardly by the inclined pieces.

With this arrangement, even if some of the first traveling air is intended to escape laterally, an escape of the first traveling air therein is suppressed by the third traveling air.

The first traveling air and the third traveling air are mixed with each other, so that vacuum correction of the back surface of the windshield is reinforced.

A preferred embodiment of the invention will now be described by way of example only and with reference to the accompanying drawings, in which:
Fig. 1 is a left side view of a saddle-ride type vehicle;
Fig. 2 is a front view of the saddle-ride type vehicle;
Fig. 3 is a cross-sectional view taken along line 3-3 in Fig. 2;
Fig. 4 is a cross-sectional view taken along line 4-4 in Fig. 2;
Fig. 5 is a perspective view for explaining a traveling air flow;
Fig. 6 is a cross-sectional view taken along line 6-6 in Fig. 5; and
Fig. 7 is a cross-sectional view taken along line 7-7 in Fig. 5.

An embodiment of the present invention will be described below based on the drawings. Note that the drawings are viewed from directions shown by reference signs.

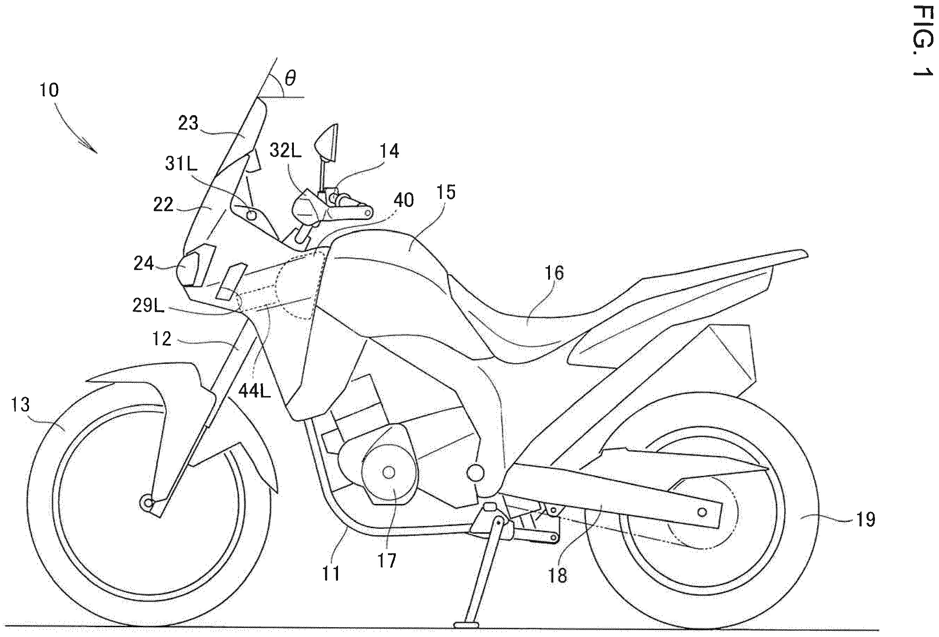

As shown in Fig. 1, a saddle-ride type vehicle 10 includes front wheel suspensions 12 steerably mounted at a front of a vehicle body frame 11, a front wheel 13 rotatably attached to lower parts of the front wheel suspensions 12, a steering handlebar 14 mounted to upper parts of the front wheel suspensions 12, a fuel tank 15 arranged below the handlebar 14 and supported on the vehicle body frame 11, a seat 16 arranged behind the fuel tank 15, an engine 17 arranged below the fuel tank 15 and supported on the vehicle body frame 11, a swing arm 18 extending rearward from the vehicle body frame 11, a rear wheel 19 rotatably attached to the swing arm 18, front cowls 22 arranged in front of the fuel tank 15 so as to surround the front wheel suspensions 12, a windshield 23 mounted above the front cowls 22, and headlights 24 mounted to the front parts of the front cowls 22. The saddle-ride type vehicle 10 is a vehicle configured such that an upper part of a rider's body is erect while they straddle the seat 16.

The windshield 23 is obliquely mounted so that in a side view of the vehicle, an upper part of the windshield is positioned rearwardly of a lower part of the windshield. A mounting angle θ with respect to a horizontal line is set within a range of 45° to 80°.

Since the mounting angle θ is set to 45° or larger, windbreak performance can be improved while achieving a reduction in weight of the windshield 23 by shortening a longitudinal length of the windshield 23. Also, since the mounting angle θ is set to 80° or smaller, the traveling air is suppressed from being excessively stemmed by the windshield 23. Therefore, the mounting angle θ is set to 45° to 80°, and more preferably set to about 60°.

Since the windshield 23 is mounted upright, predetermined windbreak action can be achieved even by a compact windshield. Since the windshield is compact, reduction in weight of the windshield can be achieved.

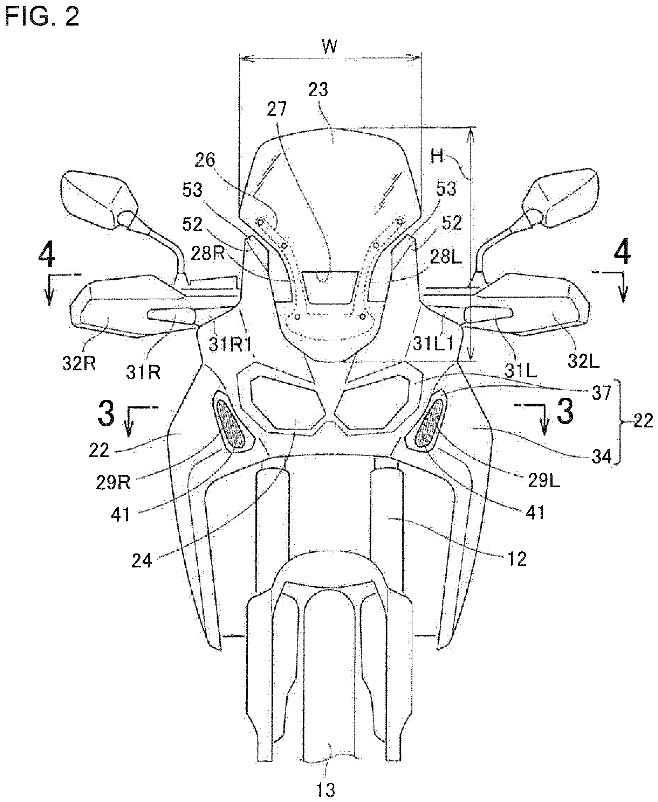

As shown in Fig. 2, the windshield 23 is arranged above the front cowls 22. The windshield 23 is supported by a windshield stay 26. The windshield 23 is formed as a vertically long windshield with a vertical dimension H being larger than a width dimension W in the lateral direction of the vehicle, and has an opening 27 formed below its vertical centre and penetrating through the windshield in the longitudinal direction of the vehicle (a front direction and a rear direction in the drawing). Further, the windshield 23 has right and left notches 28R, 28L (in the following, a reference sign R is indicative of a suffix showing the right, and a reference sign L is indicative of a suffix showing the left) formed on the right side and the left side of the opening 27 respectively, so that a lower part of the windshield is recessed laterally inward with respect to the vertically central portion.

The front cowls 22 are provided with headlights 24 in the lateral centre. Introduction ports 29R, 29L composed of openings which open forwardly are provided respectively on a right side and a left side of the headlights 24. Right and left turn signal lamps 31 R, 31 L and strut parts 31 R1, 31L1 for supporting the turn signal lamps 31 R, 31 L are provided above the headlights 24.

In a front view of the vehicle, the turn signal lamps 31 R, 31 L or the strut parts 31 R1, 31L1 overlap with knuckle guards 32R, 32L located behind the turn signal lamps 31 R, 31 L or the strut parts 31 R1, 31 L1.

As shown in Fig. 1, the introduction ports 29R, 29L are arranged below the handlebar 14, and as shown in Fig. 2, the introduction ports 29R, 29L are arranged laterally outside of the front wheel suspensions 12.

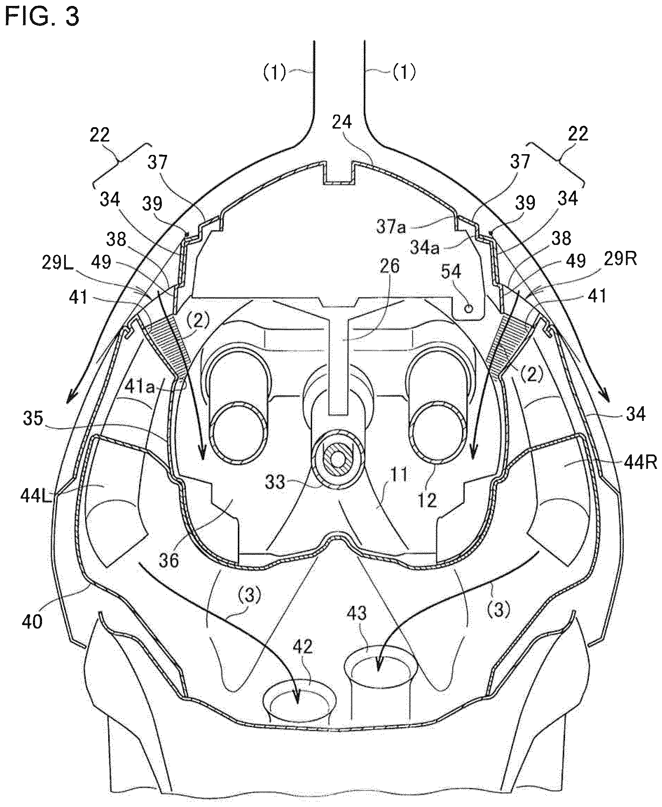

As shown in Fig. 3, the front cowls 22 are configured in such a manner that middle members 34 are joined to front sides of front members 37. The front members 37 are formed with air introduction passage parts 49, 49, which extend so as to be continuous with rear sides of the introduction ports 29R, 29L formed in the middle members 34.

The windshield stay 26 extends forward of the vehicle from the head pipe 33 provided at a front part of the vehicle body frame 11. Also, the front wheel suspensions 12 are steerably mounted to the head pipe 33. The inner cowl 35 is arranged inside of the middle members 34. The inner cowl 35 forms a steering space 36 for allowing steering of the front wheel suspensions 12 while surrounding the head pipe 33 and the front wheel suspensions 12.

The headlights 24 are provided with LED light sources, and are exposed forwardly from headlight cowl parts 37a provided with headlight openings formed in the front members 37. Openings 34a are formed in the middle members 34 along the peripheries of the headlight cowl parts 37a of the front members 37.

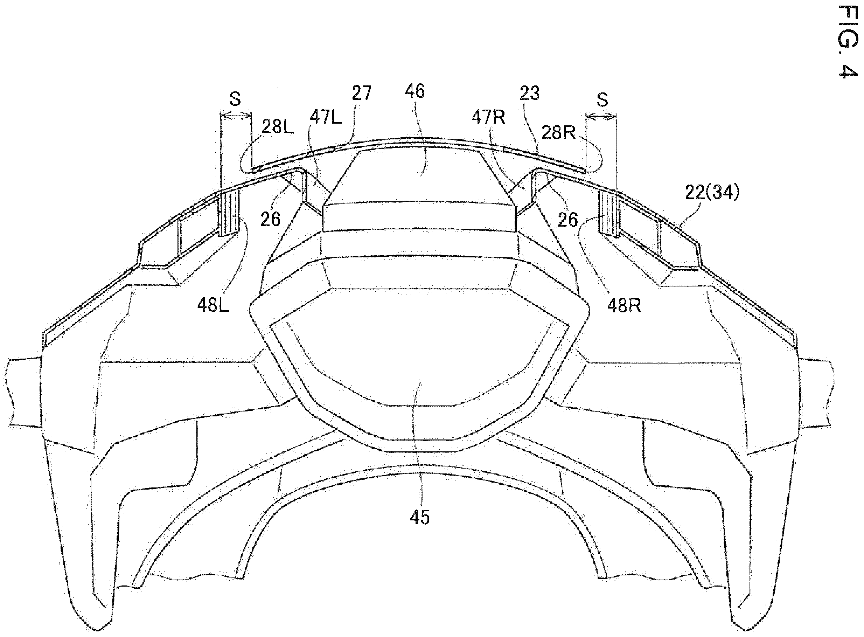

Also, the front members 37 are formed integrally with a guide member (indicated by reference sign 46 in Fig. 4) arranged behind the windshield 23.

In laterally outer portions of the front members 37, rearwardly recessed parts 38, 38 are formed in the middle members 34, and the introduction ports 29R, 29L are formed in the recessed parts 38, 38. Note that the recessed parts 38 are recessed rearward of the vehicle with respect to tangents 39 which contact the headlight cowl parts 37a and laterally outer sides of the recessed parts formed in the middle members 34.

During turning, the traveling air flowing along the headlights 24 is led to smoothly flow along the tangents 39 as shown by arrows (1), (1). On the other hand, during straight-ahead traveling, the traveling air from the front side of the vehicle is led to flow directly into the introduction ports 29R, 29L as shown by arrows (2), (2).

Since the recessed parts 38, 38 are formed, the traveling air is led to flow as shown by the arrows (1), (1) during turning. Therefore, even if a bank angle is changed when the vehicle is banked during turning, resistance caused by the traveling air flowing along the front surface of the front cowl can be substantially kept constant. As a result, traveling performance can be excellently maintained.

In the embodiment, guide walls 41, 41 inclined inwardly and upwardly are connected to the introduction ports 29R, 29L. The traveling air can be led to flow upwardly and towards the lateral centre of the vehicle body by the guide walls 41, 41. The guide walls 41, 41 configured in this way are formed integrally with the inner cowl 35.

An inner end 41 a of the guide wall 41 extends laterally inwardly as far as a laterally inner edge 29a of the introduction port 29L, or to a side of the centre of the vehicle body. As a result, in Fig. 2, the guide walls 41, 41 can be seen through the introduction ports 29R, 29L. That is, since the inside of the cowl (which can include wiring or an air intake duct 44) is not brought into view through the introduction ports 29R, 29L, appearance quality can be improved.

In Fig. 3, an air cleaner case 40 is arranged behind the head pipe 33 in the vehicle, and inlet ports 42, 43 for the engine 17 are arranged in the air cleaner case 40. Air intake ducts 44R, 44L are arranged between the inner cowl 35 and the middle members 34 of the front cowls 22, and some of the traveling air is introduced from below the front cowls 22 into the air cleaner case 40 through the air intake ducts 44R, 44L and is introduced to the inlet ports 42, 43 as shown by arrows (3), (3).

Also, the traveling air as shown by the arrows (2), (2) reaches the steering space 36. The steering space 36 is configured such that at least an upper surface thereof is open, and the traveling air (as shown by the arrows (2), (2)) is led to flow upward (to a front side in the drawing) behind the front cowls 22 and in front of an occupant. More specifically, the traveling air (as shown by the arrows (2), (2)) is led to flow upward behind the front cowls 22 and in front of the fuel tank 15, that is, in front of the handlebar 14.

Introduction of the traveling air flowing laterally outside of the front cowls and the windshield, to the laterally inner side of the vehicle as a result of the vacuum (low pressure generated) behind the front cowls and behind the windshield, can be suppressed by the air introduction flowing outside of a front fork in the steering space.

Note that the intake ducts 44R, 44L can be dispensed with, and an intake passage for introducing intake air for the engine may be provided or formed between the inner cowl 35 and the middle members 34. Also, an outside temperature sensor 54 is supported behind the headlights 24, and the temperature of the traveling air flowing through the air introduction passage parts is measured. Thereby, since fresh air is normally introduced, the temperature sensing accuracy of the outside air temperature can be improved.

As shown in Fig. 4, the opening 27 is formed in the windshield 23, and the guide member 46 rising obliquely upwardly and rearwardly is provided in a position rearward of the opening 27. In this example, a meter case 45 is arranged behind the opening 27, and an upper end of the guide member 46 is placed on or connected to a front edge of the meter case 45.

Also, a member having an L-shaped cross-sectional surface is employed as the windshield stay 26 for supporting the windshield 23. The windshield stay 26 has one surface parallel to the windshield 23 and another surface which extends in the longitudinal direction of the vehicle. Specifically, the other surfaces of the windshield stays 26 are side guide surfaces 47R, 47L, and are arranged to sandwich the guide member 46.

Also, predetermined intervals S, S are kept between the notches 28R, 28L formed in the windshield 23 and the middle members 34. Further, the middle members 34 are provided with inner wall guide surfaces 48R, 48L extending rearwardly.

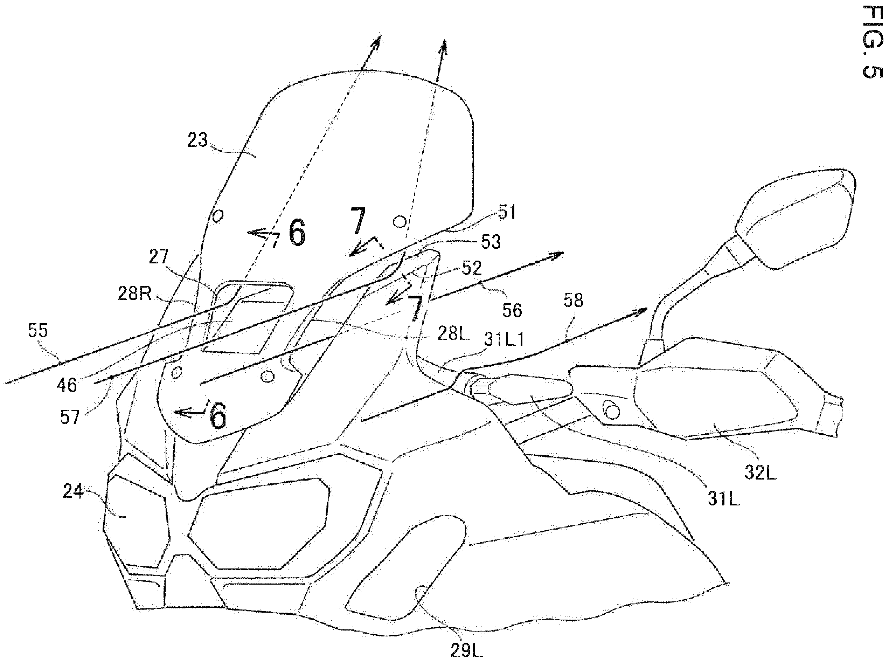

As shown in Fig. 5, an upper part of the notch 28L formed in the windshield 23 has an inclined edge 51 inclined so as to increase in height laterally outwardly. Also, the middle member 34 has an inclined piece 53 in a position behind the inclined edge 51, the inclined piece being bent rearwardly along a ridge line 52 which extends substantially parallel to the inclined edge 51. The notch 28R is arranged in a similar manner.

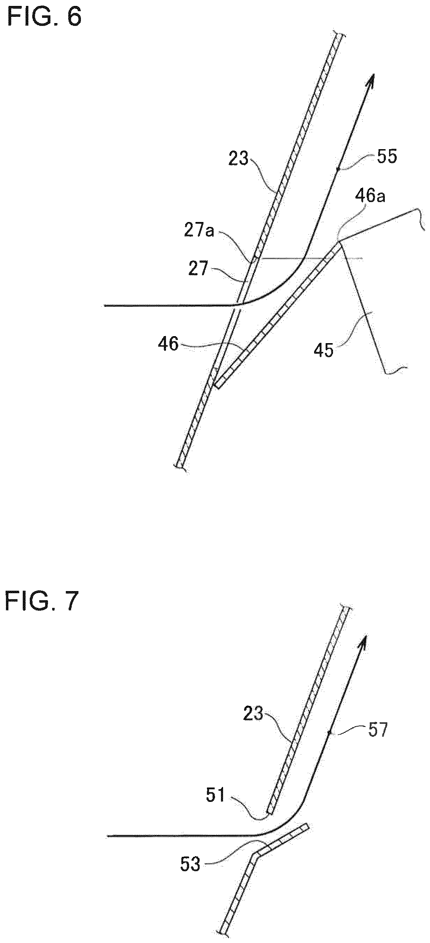

As shown in Fig. 6, the guide member 46 is provided behind the opening 27, and the first traveling air 55 introduced through the opening 27 is led to flow upward along the back surface of the windshield 23. An upper end 46a of the guide member 46 extends upward beyond a horizontal line passing through an upper edge 27a of the opening 27, and so in a front view of the vehicle, the opening 27 overlaps with the guide member 46. That is, the guide member 46 and the opening 27 overlap with each other when seen from the front. Especially, in a height direction of the opening 27, the entire opening overlaps with the guide member 46.

As shown in Fig. 7, the third traveling air 57 is bent by the inclined piece 53, and is moved upward along the back surface of the windshield 23 and laterally inwardly.

A flow direction of the first traveling air 55 or the like will now be described in detail based on Fig. 5.

The first traveling air 55 as shown in Fig. 5 passes through the opening 27 formed in the windshield 23. Immediately after that, a direction of the first traveling air 55 is changed by the guide member 46, and the air is moved upward along the back surface of the windshield 23. Thereby, the vacuum (low pressure) at the back surface of the windshield 23 is corrected.

At this time, the right and left side guide surfaces 47R, 47L as shown in Fig. 4 become effective. That is, after the first traveling air hits against the guide member 46, the first traveling air 55 is suppressed from being dispersed in the lateral direction by the side guide surfaces 47R, 47L.

In Fig. 5, the second traveling air 56 is introduced between the notch 28L and the inner wall guide surface (the reference sign 48L in Fig. 4). As shown in Fig. 4, since the inner wall guide surfaces 48R, 48L extend rearwardly, the second traveling air 56 is led to flow out to the rear side of the vehicle without entering into behind the windshield 23.

In Fig. 5, the third traveling air 57 is moved upward along the back surface of the windshield 23 and toward the lateral centre of the vehicle after the traveling air is bent by the inclined piece 53. The first traveling air 55 with the width limited by the side guide surfaces 47R, 47L shown in Fig. 4 is intended to extend in the lateral direction above the windshield stay (the reference sign 26 in Fig. 2); however, in Fig. 5, extension of the first traveling air 55 is limited by the third traveling air 57 directed to laterally inwardly. Therefore, the first traveling air 55 is moved upward along the back surface of the windshield 23 while the extension of the first traveling air 55 is limited, so that especially, the vacuum (low pressure) generated in the vicinity of the upper edge of the windshield 23 is corrected.

In Fig. 2, the knuckle guards 32R, 32L are formed to have large frontal area so as to cover the rider's hands gripping the grips.

As shown in Fig. 5, the fourth traveling air 58 first reaches the turn signal lamp 31 L or the strut part 31 L1, and is dispersed there, and a course of the fourth traveling air is changed to an upward direction. As a result, wind pressure at the knuckle guard 32L is relieved.

Note that in the embodiment, the present invention is applied to a two-wheeled vehicle; however, the present invention may be applied to a saddle-ride type vehicle provided with three wheels or four wheels.

The present invention is suitable for a two-wheeled vehicle including a windshield and a front cowl.

## Claims

1. A saddle-ride type vehicle comprising:
a vehicle body frame (11) with a head pipe (33);
a front wheel suspension (12) arranged below the head pipe (33);
a handlebar (14) arranged above the head pipe (33) that steers the front wheel suspension (12);
a front cowl (22) supported on the vehicle body frame (11) that covers an upper part of the front wheel suspension (12) and the handlebar (14) from a front side of the vehicle; and
a windshield (23) supported on the vehicle body frame (11) through a windshield stay (26) and arranged above the front cowl (22),
wherein the windshield (23) is formed as a vertically long windshield with a vertical dimension being larger than a lateral dimension, and has an opening (27) formed below the vertical centre of the windshield and penetrating longitudinally through the windshield, and
a guide member (46) allowing first traveling air (55) flowing through the opening (27) to flow along a back surface of the windshield (23) is arranged behind the opening (27);
**characterized in that** the windshield (23) has right and left notches (28R, 28L) formed on right and left sides of the opening (27), the notches being formed in such a manner that a lower part of the windshield is recessed laterally inward in comparison with the vertical centre,
the front cowl (22) is provided with inner wall guide surfaces (48R, 48L) extending rearwardly and keeping predetermined intervals (S, S) from the notches (28R, 28L), and
second traveling air (56) is introduced between the notches (28R, 28L) and the inner wall guide surfaces (48R, 48L).

2. The saddle-ride type vehicle according to claim 1, wherein the windshield stay (26) is provided with right and left side guide surfaces (47R, 47L) for sandwiching the guide member (46) and also suppressing dispersion of the first traveling air (55) in the lateral direction.

3. The saddle-ride type vehicle according to claim 2, wherein the windshield (23) is obliquely attached in such a manner that an upper part thereof is positioned rearwardly of a lower part thereof in a side view of the vehicle, and a mounting angle (θ) with respect to a horizontal line is set within a range of 45° to 80°.

4. The saddle-ride type vehicle according to any preceding claim,
wherein inclined edges (51) are provided above the notches (28R, 28L) and are inclined so as to be heightened laterally outwardly,
the front cowl (22) has inclined pieces (53) located behind the inclined edges (51), the inclined pieces being bent rearwardly along ridge lines (52) which extend substantially parallel to the inclined edges (51), and
third traveling air (57) flowing along the inclined edges (51) is directed laterally inwardly by the inclined pieces (53).

## Patentansprüche

1. Sattelfahrzeug, aufweisend:
einen Fahrzeugkarosserierahmen (11) mit einem Kopfrohr (33);
eine Vorderradaufhängung (12), die unter dem Kopfrohr (33) angeordnet ist;
einen Lenker (14), der über dem Kopfrohr (33) angeordnet ist, der die Vorderradaufhängung (12) lenkt;
eine vordere Haube (22), die an dem Fahrzeugkarosserierahmen (11) gelagert ist, die einen oberen Teil der Vorderradaufhängung (12) und den Lenker (14) von einer Vorderseite des Fahrzeugs her abdeckt; und
eine Windschutzscheibe (23), die durch eine Windschutzscheibenhalterung (26) an dem Fahrzeugkarosserierahmen (11) gelagert ist und über der vorderen Haube (22) angeordnet ist,
wobei die Windschutzscheibe (23) als vertikal lange Windschutzscheibe ausgebildet ist, die einer vertikalen Abmessung hat, die größer als eine laterale Abmessung ist, und eine Öffnung (27), die unter der vertikalen Mitte der Windschutzscheibe ausgebildet ist und die Windschutzscheibe in Längsrichtung durchdringt, und
ein Führungsglied (46), das einer durch die Öffnung (27) strömenden ersten Durchgangsluft (55) erlaubt, entlang einer Rückfläche der Windschutzscheibe (23) zu strömen, das hinter der Öffnung (27) angeordnet ist;
**dadurch gekennzeichnet, dass** die Windschutzscheibe (23) rechte und linke Kerben (28R, 28L) aufweist, die auf der rechten und der linken Seite der Öffnung (27) ausgebildet sind, wobei die Kerben derart ausgebildet sind, dass ein unterer Teil der Windschutzscheibe im Vergleich zur vertikalen Mitte lateral nach innen zurücksteht,
wobei die vordere Haube (22) mit Innenwandführungsflächen (48R, 48L) versehen ist, die sich nach hinten erstrecken und vorbestimmte Abstände (S, S) zu den Kerben (28R, 28L) beibehalten, und
zweite Durchgangsluft (56) zwischen den Kerben (28R, 28L) und den Innenwandführungsflächen (48R, 48L) eingeführt wird.

2. Sattelfahrzeug nach Anspruch 1, wobei die Windschutzscheibenhalterung (26) mit rechten und linken Seitenführungsflächen (47R, 47L) zum sandwichartigen Halten des Führungsglieds (46) versehen ist und auch eine Ausbreitung der ersten Durchgangsluft (55) in der lateralen Richtung unterdrückt.

3. Sattelfahrzeug nach Anspruch 2, wobei die Windschutzscheibe (23) schräg befestigt ist, auf eine Weise, dass ein oberer Teil davon in einer Seitenansicht des Fahrzeugs hinter einem unteren Teil davon angeordnet ist und ein Haltewinkel (θ) in Bezug auf eine horizontale Linie innerhalb eines Bereichs von 45° bis 80° eingestellt ist.

4. Sattelfahrzeug nach einem der vorhergehenden Ansprüche,
wobei geneigten Kanten (51) oberhalb der Kerben (28R, 28L) vorgesehen sind und so geneigt sind, dass sie sich lateral nach außen erhöhen,
wobei die vordere Haube (22) geneigte Stücke (53) hat, die hinter den geneigten Kanten (51) angeordnet sind, wobei die geneigten Stücke entlang den Randlinien (52), die sich im Wesentlichen parallel zu den geneigten Kanten (51) erstrecken, nach hinten gebogen sind, und
dritte Durchgangsluft (57), die entlang den geneigten Kanten (51) strömt, durch die geneigten Stücke (53) lateral nach innen geleitet wird.

## Revendications

1. Véhicule du type à enfourchement comprenant :
un cadre de corps de véhicule (11) avec un tuyau de tête (33) ;
une suspension de roue avant (12) agencée en dessous du tuyau de tête (33) ;
un guidon (14) agencé au-dessus du tuyau de tête (33) qui dirige la suspension de roue avant (12) ;
un capot avant (22) supporté sur le cadre de corps de véhicule (11) qui recouvre une partie supérieure de la suspension de roue avant (12) et du guidon (14) à partir d'un côté avant du véhicule ; et
un pare-brise (23) supporté sur le cadre de corps de véhicule (11) par un montant de pare-brise (26) et agencé au-dessus du capot avant (22),
dans lequel le pare-brise (23) est formé par un pare-brise verticalement long avec une dimension verticale qui est plus grande qu'une dimension latérale, et a une ouverture (27) formée au-dessous du centre vertical du pare-brise et pénétrant longitudinalement à travers le pare-brise, et
un élément de guidage (46) permettant à un premier air de déplacement (55) s'écoulant à travers l'ouverture (27) de s'écouler le long d'une surface arrière du pare-brise (23) est agencé derrière l'ouverture (27) ;
**caractérisé en ce que** le pare-brise (23) a des encoches droite et gauche (28R, 28L) formées sur les côtés droit et gauche de l'ouverture (27), les encoches étant formées de manière qu'une partie inférieure du pare-brise soit renfoncée latéralement vers l'intérieur en comparaison du centre vertical,
le capot avant (22) est pourvu de surfaces de guidage de parois internes (48R, 48L) s'étendant vers l'arrière et maintenant des intervalles prédéterminés (S, S) avec les encoches (28R, 28L), et
un deuxième air de déplacement (56) est introduit entre les encoches (28R, 28L) et les surfaces de guidage de parois internes (48R, 48L).

2. Véhicule du type à enfourchement selon la revendication 1, dans lequel le montant de pare-brise (26) est pourvu de surfaces de guidages de côtés gauche et droit (47R, 47L) pour prendre en sandwich l'élément de guidage (46) et supprimer également la dispersion du premier air de déplacement (55) dans la direction latérale.

3. Véhicule du type à enfourchement selon la revendication 2, dans lequel le pare-brise (23) est fixé en oblique de manière que sa partie supérieure soit positionnée vers l'arrière de sa partie inférieure en vue latérale du véhicule, et un angle de montage (θ) par rapport à une ligne horizontale est réglé dans une plage de 45° à 80°.

4. Véhicule du type à enfourchement selon l'une quelconque des revendications précédentes,
dans lequel des bords inclinés (51) sont ménagés au-dessus des encoches (28R, 28L) et sont inclinés de manière à être rehaussés latéralement vers l'extérieur,
le capot avant (22) a des pièces inclinées (53) situées derrière les bords inclinés (51), les pièces inclinées étant fléchies vers l'arrière le long de lignes de crête (52) qui s'étendent sensiblement parallèlement aux bords inclinés (51), et
un troisième déplacement d'air (57) s'écoulant le long des bords inclinés (51) est dirigé latéralement vers l'intérieur par les pièces inclinées (53).
